# FASCICULE DE BREVET EUROPEEN

(11) **EP 0 571 290 B1**
(45) Date de publication et mention de la délivrance du brevet: **23.12.1998**
(21) Numéro de dépôt: 93401302.0
(22) Date de dépôt: 19.05.1993
(51) Int. Cl.: A43D 86/00, B29C 45/14

(54) **Procédé de fabrication d'un article chaussant ou d'une chaussure et machine pour sa mise en oeuvre**
Verfahren und Vorrichtung zur Herstellung von Schuhwerk oder Schuhen
Method and apparaus for manufacturing footwear of shoes

(30) Priorité: 20.05.1992 FR 9206110; 07.01.1993 FR 9300093
(43) Date de publication de la demande: 24.11.1993
(73) Titulaire: Raimbault, Jean-Pierre, F-49360 Yernay (FR); Vidal, Jacques, F-49300 Cholet (FR)
(72) Inventeur: Raimbault, Jean-Pierre, F-49360 Yernay (FR); Vidal, Jacques, F-49300 Cholet (FR)
(74) Mandataire: Dawidowicz, Armand

(56) Documents cités:
- FR-A- 2 241 602
- GB-A- 1 233 373
- GB-A- 2 091 626
- US-A- 3 423 854
- US-A- 3 522 343
- DATABASE WPI Week 8801, Derwent Publications Ltd., London, GB; AN 88-002054 & GB-A-2 191 969 (CHOU J. J.) 31 Décembre 1987

## Description

La présente invention concerne une amélioration à un procédé de fabrication d'articles chaussants ou de chaussures dans lequel la semelle externe réalisée par injection de matière thermoplastique est soudée directement sur le dessous d'une tige de chaussure de telle sorte que le moulage de la semelle et le collage de la tige à la semelle sont réalisés en une seule opération.

Les procédés de fabrication d'articles chaussants ou de chaussures dans lesquels on moule directement une semelle sur le dessous d'une tige de chaussure sont connus. Ces procédés permettent de former une semelle avec une surface de fixation qui est directement complémentaire au-dessous de la tige de chaussure en même temps qu'elle est reliée à la tige de chaussure. Cependant, on constate, avec de nombreux matériaux de tiges de chaussure, en particulier les tissus, que la liaison entre la matière formant la semelle et la tige de la chaussure est trop faible pour obtenir un article chaussant de qualité. Pour pallier cet inconvénient, les solutions techniques retenues jusqu'ici ont consisté soit à encoller le matériau constitutif de la tige, ce qui limite la gamme de tissus utilisable par les fabricants, soit à utiliser une feuille d'un adhésif thermoplastique qui est maintenue sur la surface sur laquelle la semelle doit être moulée. Cette deuxième solution décrite notamment dans les brevets US-A-3.522.343, FR-A-2.001.744, puis reprise dans les brevets US-A-3.951.919 et FR-A-2.241.602 est particulièrement intéressante car elle permet d'associer en une seule étape l'injection de la semelle et l'assemblage de celle-ci avec le reste de la chaussure au moyen d'un film de colle thermofusible, l'énergie thermique étant transférée de la matière thermoplastique en fusion vers le film de colle pendant l'injection pour produire le collage. Cependant la mise en oeuvre de ce procédé, telle que décrite dans les brevets cités ci-dessus, supprime tout l'intérêt de ce dernier car il est nécessaire dans ce procédé de solidariser dans un premier temps la première de montage à la tige par un montage dit à la ficelle. Dans une deuxième étape du procédé de fabrication, on découpe des bandes de pellicule adhésive que l'on dispose au niveau de la liaison entre la tige et la première de montage de manière à couvrir la périphérie de l'ensemble de la tige puis, on vient introduire cette tige dans la cavité de moulage de telle sorte que la composition adhésive soit comprise entre le bord latéral du moule et la tige. De ce fait, la pellicule adhésive ne vient recouvrir qu'une partie de la première de montage. En conséquence, la cavité de moulage n'est pas fermée par la composition adhésive et la matière constitutive de la semelle peut fluer à travers la première de montage fournissant un aspect final du produit passable et une mise en oeuvre du procédé fastidieux.

Un autre procédé de fabrication d'une semelle encore moins performant que celui décrit ci-dessus est décrit dans le brevet GB-A-1.233.373. Dans ce procédé, on utilise un moule fermé en deux parties entre lesquelles on pince un film de composition adhésive recouvert d'un matériau pelable. On injecte alors à l'intérieur dudit moule, la matière constitutive de la semelle de chaussure. Le produit fini obtenu est constitué d'une semelle recouverte d'une composition adhésive elle-même recouverte d'un film pelable. Pour permettre l'assemblage de la semelle à une tige de chaussure, il est nécessaire après enlèvement du matériau pelable de réchauffer la semelle de chaussure pour l'associer par pressage à la tige de ladite chaussure.

Un autre but de l'invention est de proposer une machine entièrement automatique et éventuellement programmable bon marché permettant la mise en oeuvre du procédé sur des chaînes de fabrication type carrousel dont le nombre de postes de travail peut être quelconque.

L'invention concerne à cet effet un procédé de fabrication d'un article chaussant ou d'une chaussure comprenant les étapes de positionnement d'une tige de chaussure sur une forme, de fermeture de la cavité d'un moule de formage d'une semelle à mouler par injection en emprisonnant une pellicule d'une composition adhésive thermofusible entre la cavité du moule et les marges de la tige destinées au soudage de la semelle, d'injection d'une composition de moulage constituée d'une matière thermoplastique pour remplir la cavité de moulage et ramollir la pellicule de composition adhésive afin de former une semelle soudée à la tige de la chaussure, procédé caractérisé en ce que, pour emprisonner la pellicule de composition adhésive thermofusible entre la cavité de moulage de la semelle et les marges de la tige destinées au soudage de la semelle, on amène la pellicule de composition adhésive soit au-dessus de l'entrée de la cavité de moulage, soit au-dessus des marges de soudage de la tige montée sur forme et en ce qu'on la dépose sans intervention humaine de préférence en au moins deux temps de manière à recouvrir soit la totalité de l'ouverture de la cavité de moulage, soit l'intégralité des marges de soudage de la tige.

Pour cette dépose en au moins deux temps, on découpe dans un premier temps l'extrémité de la pellicule solidaire du reste du film de telle sorte que cette extrémité libre vient se placer par gravité à l'extérieur et au voisinage, soit d'un bord de l'entrée de la cavité de moulage de la semelle, soit d'un bord de la tige montée sur forme, puis dans un deuxième temps, on libère de ses moyens d'amenée l'autre extrémité de la découpe de pellicule de composition adhésive retenue, soit au-dessus de la cavité de moulage, soit au-dessus de la tige, en particulier des marges de soudage de ladite tige, de telle sorte que cette autre extrémité de la découpe vient se placer soit au voisinage d'un bord opposé de la cavité de moulage recouvrant ainsi la totalité de l'ouverture de la cavité de moulage, soit au voisinage d'un bord opposé de la tige de manière à recouvrir la totalité des marges de soudage de ladite tige.

En outre, selon un premier mode de réalisation de l'invention, la pellicule de composition adhésive étant disposée au-dessus de l'entrée de la cavité de moulage, on amène la tige montée sur forme et plus particulièrement les marges de soudage de ladite tige en contact de pression avec la face supérieure de ladite pellicule et on injecte de manière quasi-simultanée la composition de moulage de la semelle.

Selon un deuxième mode de réalisation de l'invention, la pellicule de composition adhésive étant disposée en contact avec les marges de soudage de la tige montée sur forme, on chauffe ladite composition adhésive à une température inférieure à sa température de fusion de manière à permettre la rétraction du film autour de ladite tige, on bascule la forme de manière à amener la tige montée sur forme et plus particulièrement les marges de soudage de la tige à l'entrée de la cavité de moulage de la semelle et on injecte de manière quasi-simultanée la composition de moulage de la semelle.

En outre, dans ces deux modes de réalisation, on prédécoupe la pellicule de composition adhésive utilisée de manière à faciliter l'ébarbage de la semelle.

L'invention concerne également une machine de distribution d'une pellicule de composition adhésive pour la mise en oeuvre du procédé comprenant des moyens de stockage de la pellicule de composition adhésive, des moyens d'amenée et de maintien temporaire de la pellicule de composition adhésive au-dessus de l'ouverture de la cavité de moulage ou au-dessus des marges de soudage de la tige et des moyens de découpe d'une portion de pellicule.

L'invention concerne enfin un film adhésif pour la mise en oeuvre du procédé caractérisé en ce qu'il comporte au moins un prédécoupage constituant une amorce de rupture dudit film.

D'autres caractéristiques et avantages de l'invention apparaîtront encore à la lecture de la description qui suit et des dessins joints, lesquels description et dessins sont donnés surtout à titre d'exemple. Dans ces dessins :

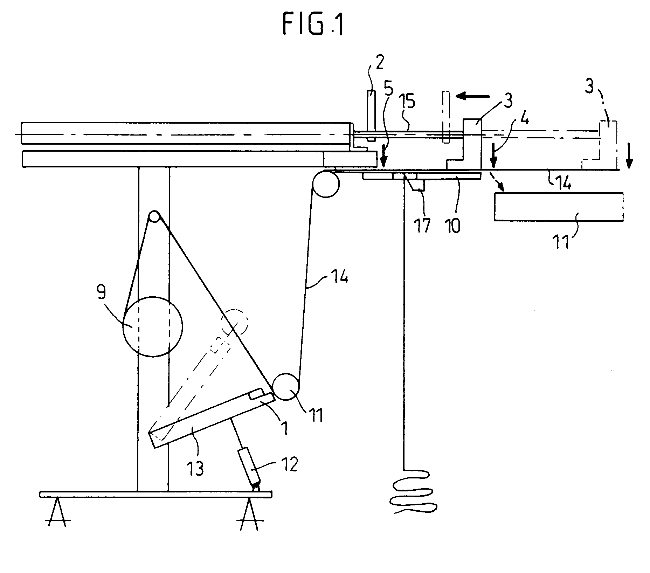

la figure 1 représente un schéma de principe d'une machine de distribution d'une pellicule de composition adhésive conforme à l'invention;
la figure 2 représente une vue de dessus d'un moule de semelle; et
la figure 3 représente une vue en perspective d'un dispositif de prédécoupage du film.

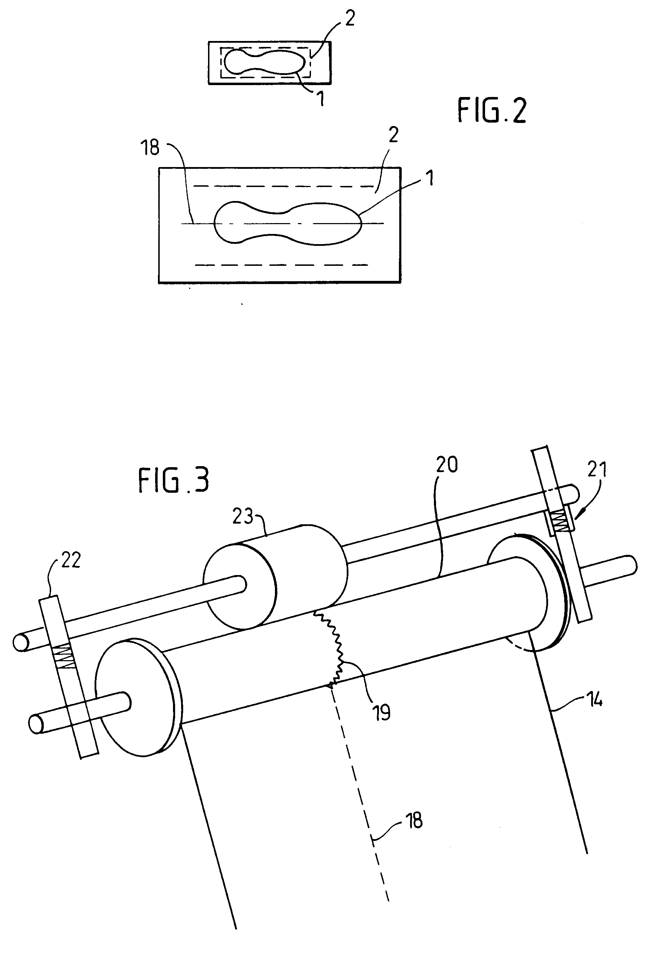

La mise en oeuvre du procédé, objet de l'invention, nécessite un certain nombre d'opérations qui doivent être réalisées dans un ordre prédéterminé. Pour l'application de ce procédé, on utilise un moule de semelle ouvert classique ou un moule couronne dont le point d'injection est disposé à la périphérie du moule. Ce moule représenté à la figure 2 présente une cavité de moulage 1 dont les bords délimitent la forme extérieure de la semelle. Ce moule est de préférence équipé de moyens de réfrigération tels qu'un circuit de circulation d'eau. On dispose également d'une forme parfaitement classique sur laquelle est placée une tige en un matériau quelconque compatible ou non avec le matériau constitutif de la semelle. Cette tige présente des marges de soudage, c'est-à-dire des portions destinée à être soudées à la semelle.

Pour obtenir une semelle parfaitement soudée à la tige de la chaussure, on peut, dans un premier mode de réalisation, procéder de la manière suivante : on dépose à plat à l'entrée de la cavité de moulage de la semelle de manière à en recouvrir complètement l'ouverture une pellicule de composition adhésive thermofusible, on amène la tige montée sur forme et plus particulièrement les marges de soudage de ladite tige en contact de pression avec la face supérieure de ladite pellicule, et on injecte de manière quasi-simultanée la composition de moulage de la semelle.

L'intérêt d'un tel procédé par rapport à l'état de la technique réside dans sa simplicité de mise en oeuvre qui le rend parfaitement applicable à une fabrication entièrement automatique.

Il faut cependant veiller à ce que le film de composition adhésive soit déposé parfaitement sur l'entrée de la cavité de moulage et recouvre parfaitement cette dernière comme le montrent les pointillés 2 de la figure 2 représentant un positionnement idéal du film adhésif à l'entrée de la cavité de moulage. Pour obtenir un dépôt du film qui soit fiable dans le cadre d'une production industrielle, on amène la pellicule de composition adhésive au-dessus de l'entrée de la cavité de moulage et on dépose en deux temps ladite pellicule sur l'ouverture ménagée par l'entrée de la cavité de moulage. Ainsi, dans un premier temps, on découpe l'extrémité de la pellicule solidaire du reste du film de telle sorte que cette extrémité libre vient se placer par gravité à l'extérieur et au voisinage d'un bord de l'entrée de la cavité de moulage de la semelle et dans un deuxième temps, on libère de ses moyens d'amenée l'autre extrémité de la découpe de pellicule de composition adhésive retenue au-dessus de la cavité de moulage de telle sorte que cette autre extrémité de la découpe vient se placer au voisinage d'un bord opposé de la cavité de moulage recouvrant ainsi la totalité de l'ouverture de la cavité de moulage. Pour éviter une dégradation et/ou un gaspillage de la pellicule de composition adhésive, on stocke cette dernière sous forme de bobine de film et on la dévide au fur et à mesure de la fabrication en fonction des besoins.

On notera, comme le montre la figure 2, que la surface de la pellicule de composition adhésive nécessaire pour recouvrir l'ouverture de la cavité de moulage est supérieure à ladite ouverture. En conséquence, une fois la semelle soudée à la tige, la pellicule de composition adhésive forme une collerette au niveau du joint tige/semelle. Cette collerette doit obligatoirement être éliminée. Cette élimination s'effectue au cours de l'éloignement de la forme de la cavité de moulage. L'onde de chaleur transmise lors de l'injection a rendu le film mou, ce qui permet de détacher aisément l'excédent de film de la soudure semelle/tige sans que des bavures ou saillies ne demeurent.

Pour faciliter la mise en oeuvre de cette étape du procédé, il est préférable de disposer d'un film prédécoupé de manière à ce que l'opérateur n'ait pas à forcer sur le film 14 au moment de l'élimination de l'excédent. Ainsi, comme le montre la figure 2, l'opérateur n'a dans le cas d'un film prédécoupé qu'à saisir deux bords disposés de part et d'autre de la ligne de prédécoupage 18 du film pour éliminer l'excédent. Dans l'exemple représenté à la figure 2, la ligne de prédécoupage 18 du film est une ligne en pointillé continue disposée sensiblement sur l'axe médian de la semelle. Bien évidemment, toutes autres dispositions et réalisations de cette ligne sont envisageables. La figure 3 donne un exemple de réalisation de cette ligne de prédécoupage simultanément à la mise en oeuvre du procédé. Dans ce cas, le dispositif de découpage comprend un organe de coupe 20 qui dans l'exemple représenté est constitué par un cylindre dont la périphérie est équipée de dents 19. Cet organe de coupe 20 est amené de manière intermittente en contact de pression avec la pellicule 14 au moyen d'un organe presseur 23 monté sur un axe parallèle à l'axe support de l'organe de coupe et relié à ce dernier par l'intermédiaire de bras de longueur variable. La variation en longueur des bras est obtenue grâce à des ressorts 21. L'organe presseur 23 en exerçant une pression discontinue sur l'organe de coupe 19 permet à ce dernier de découper de manière discontinue le film.

Dans le cas d'un deuxième mode de réalisation de l'invention, plus particulièrement approprié dans le cas de semelles importantes qui remontent le long de la chaussure et qui sont moulées au moyen de moules couronnes, on procède de la manière suivante; on place une tige de chaussure sur une forme, l'ensemble étant positionné de telle sorte que la tige soit placée au-dessus de la forme par basculement de la forme. Une fois la tige en position, on vient recouvrir celle-ci et en particulier les marges de la tige destinées au soudage de la semelle d'une pellicule de composition adhésive thermofusible. Cette opération s'effectue en deux temps au moyen d'un bras manipulateur approprié décrit ci-après. Dans un premier temps, on découpe l'extrémité de la pellicule solidaire du reste du film de telle sorte que cette extrémité libre vient se placer par gravité à l'extérieur et au voisinage d'un bord de ladite tige et en ce que dans un deuxième temps, on libère de ses moyens d'amenée l'autre extrémité de la découpe de pellicule de composition adhésive retenue au-dessus de ladite tige, de telle sorte que cette autre extrémité de la découpe vient se placer au voisinage d'un bord opposé de la tige recouvrant ainsi la totalité de la tige et en particulier les marges de soudage de cette tige. Généralement, la surface de pellicule adhésive, pour recouvrir la totalité de la surface de la tige, est supérieure à ladite surface, l'excès de pellicule non utilisé étant éliminé au cours du démoulage de la semelle. Lorsque la pellicule de composition adhésive a été ainsi déposée et positionnée sur ladite tige, on chauffe ladite composition par des moyens de chauffage appropriés tels qu'une soufflerie, envoyant un air chaud sur la surface supérieure de la composition de manière à élever la température du film à une température inférieure à la température de fusion de ce film mais suffisante pour permettre la rétraction de ce film contre les parties périphériques de la tige de manière à assurer le maintien de ce film sur la tige lorsque la forme sera rebasculée de manière à venir se placer par la suite au-dessus et à l'entrée de la cavité de moulage. Lorsque ce maintien de la composition adhésive sur la tige a été réalisé, la forme est alors basculée et vient se placer à l'entrée de la cavité de moulage. Le moule est refermé ou était déjà préalablement fermé, si le moule n'était pas un moule de type couronne, et on injecte de manière quasi-simultanée la composition de moulage de la semelle.

De la même façon que dans le mode de réalisation précédent, la matière thermoplastique injectée remplit la cavité de moulage et ramollit la pellicule de composition adhésive afin de former une semelle soudée à la tige de la chaussure.

De même, comme décrit précédemment, on peut disposer soit d'un film de composition adhésive prédécoupé de manière à ce que l'opérateur n'ait pas à forcer sur le film au moment de l'élimination de l'excédent de film lors de l'ébarbage de ladite semelle, soit utiliser un film découpé lors d'une opération préalable à la dépose de ce film sur la surface de la tige.

Pour mettre en oeuvre ce procédé indépendamment de son mode de mise en oeuvre dans le cadre d'une fabrication industrielle à des cadences importantes, il convient de disposer d'une machine de distribution de la pellicule de composition adhésive entièrement automatique qui coopère par exemple avec les postes de travail d'un carrousel. Cette machine doit comporter entre autres des moyens de stockage de la pellicule de composition adhésive, des moyens d'amenée et de maintien de la pellicule de composition adhésive soit au-dessus de l'ouverture de la cavité de moulage, soit au-dessus de la tige et des moyens de découpe d'une portion de pellicule. Ainsi, dans l'exemple représenté à la figure 2 qui illustre le premier mode de réalisation de l'invention, les moyens de stockage de la pellicule de composition adhésive sont constitués par un support rotatif horizontal type rouleau autour duquel est enroulée la pellicule adhésive formant ainsi une bobine de film 9. Cette pellicule adhésive 14 est dévidée de son support d'une longueur suffisante pour que l'extrémité libre de ladite pellicule vienne, après être passée entre une succession de rouleaux tels que le rouleau 11, entre un organe désigné par 3 sur la figure 2 et une plaque horizontale 10. L'un de ces rouleaux 11, à travers lesquels passe le film adhésif 14 avant d'aboutir sous l'organe 3 creux, est monté solidaire du bâti de la machine au moyen d'un bras 13 monté à pivotement sur le bâti de la machine et actionné par un vérin 12. Ce rouleau 11 exerce au cours de son déplacement une pression plus ou moins importante sur le film adhésif 14 constituant ainsi un moyen de tension et de dévidage du film. Cette machine comporte également un organe 3 multi-fonctions. En effet, cet organe 3 actionné par un vérin 15 et monté solidaire de la tige dudit vérin permet la préhension du film adhésif 14 et son amenée au-dessus de la cavité de moulage du moule 11 par un mouvement de translation. Il est à noter que le bâti de la machine affecte une forme de T dont la branche verticale supporte les moyens de stockage du film adhésif 14 et dont la branche horizontale constitue un support de l'organe d'actionnement 15 de l'organe 3. Pour réaliser cette préhension du film adhésif 14, l'organe 3 est muni de doigts ou de logements creux formant des suceurs reliés à une source de dépression de manière à jouer le rôle de ventouses. Grâce à cette dépression, les doigts 3 saisissent le film 14 par aspiration et l'amènent au-dessus de la cavité de moulage 3. Ensuite, il suffit de supprimer la dépression voire même de souffler de l'air par l'intermédiaire de ces doigts ou logements creux pour désolidariser le film 14 de l'organe 3. Cette machine comporte également des moyens de découpe du film adhésif 14 constitués par exemple d'un fil métallique parcouru par un courant électrique et désigné par 4 dans la figure 2.

Le fonctionnement de la machine au cours d'un cycle de soudure est le suivant : on remonte le rouleau 11 solidaire par le bras 13 du bâti de la machine par actionnement du vérin 12 supprimant ainsi toute tension du film 14. Le film adhésif 14 disposé entre l'organe 3 et la plaque support 10 est aspiré par les doigts ou des logements creux de l'organe 3 formant ventouses et amené, sous l'action du déplacement de l'organe 3 grâce à un organe d'actionnement tel que le vérin 15, à une extrémité du moule 11 de telle sorte que le film 14 recouvre l'ensemble de l'ouverture de la cavité de moulage. A ce moment, le film 14 est découpé au moyen du fil chaud 4 de manière à être désolidarisé du reste de la bobine de film 9. Cette extrémité du film devenue libre vient se placer par gravité sur le bord du moule opposé à celui qui présente au-dessus de lui l'organe 3. L'organe 3 peut alors libérer l'extrémité du film 14 soit en supprimant la dépression existant à l'intérieur des doigts ou logements creux dont il est muni et même éventuellement en soufflant de l'air à travers ces logements. Le film 14 recouvre donc désormais la totalité de la cavité de moulage. L'organe 3 est alors ramené à sa position de départ. Un vérin désigné par 5 dans la figure 2 et disposé sur le parcours du film adhésif 14 entre la bobine 9 et l'organe 3 s'abaisse au cours de ce retour de l'organe 3 à sa position de départ de manière à pincer le film 14 pour l'immobiliser. Ainsi, le rouleau 11 monté solidaire du bras 13 lui-même monté à pivotement sur le bâti de la machine peut de nouveau s'abaisser, ce mouvement entraînant le dévidage d'une portion de film généralement de dimension sensiblement égale ou légèrement supérieure à celle qui vient d'être utilisée. De ce fait, un nouveau cycle peut recommencer dès que l'injection de la matière de moulage de la semelle aura été réalisée.

Dans le cas où on utilise une pellicule de composition adhésive 14 équipée d'un film de protection, on élimine ce film au moyen par exemple d'une butée 17 disposée sous la plaque de support de film 10 et qui permet la séparation des deux couches formant la pellicule. Une bobine supplémentaire peut dans ce cas être prévue pour permettre le rembobinage de la couche protectrice du film. Il est également possible d'équiper cette machine de programmes qui permettent de faire varier le temps entre l'aller et le retour de l'organe 3, le temps entre le dépôt des deux extrémités du film 14, le temps entre deux cycles de soudure, etc.

Dans le cas d'une machine conçue pour la mise en oeuvre du deuxième mode de mise en oeuvre du procédé, il suffira de prévoir que le film soit amené non plus au-dessus de la cavité de moulage mais au-dessus de la tige, en particulier des marges de soudage de la tige et ce, grâce à un réglage approprié. En outre, la forme recevant la tige sera équipée de moyens de basculement afin de faciliter la dépose du film sur la tige. Quant aux moyens de chauffage permettant la rétraction du film sur la tige, ils seront disposés sur la machine ou sur le carrousel.

Bien évidemment, on peut compliquer à souhait la dépose du film. Ainsi, on peut imaginer que l'on découpe l'extrémité de la pellicule solidaire du reste du film, que l'on amène cette portion de film au-dessus de l'ouverture de la cavité de moulage ou des marges de soudage de la tige de la semelle, que l'on libère dans un premier temps de ses moyens d'amenée une extrémité de la découpe de pellicule de composition adhésive de telle sorte que cette extrémité libre vient se placer, par gravité à l'extérieur et au voisinage, soit d'un bord de l'entrée de la cavité de moulage de la semelle, soit d'un bord de la tige montée sur forme, et que l'on libère dans un deuxième temps de ses moyens d'amenée l'autre extrémité de la découpe qui vient soit se placer au voisinage d'un bord opposé de la cavité de moulage recouvrant ainsi la totalité de l'ouverture de la cavité de moulage, soit d'un bord opposé de la tige de manière à recouvrir la totalité des marges de soudage de ladite tige.

Bien évidemment, l'invention ne se limite pas aux formes de réalisation représentées mais englobe au contraire toute machine qui permet la dépose de ce film en au moins deux temps.

Il est également possible de prévoir un organe 2 qui vient en butée au cours de certaines étapes du procédé au niveau du carrousel de manière à bien positionner la machine par rapport au carrousel.

## Revendications

1. Procédé de fabrication d'un article chaussant ou d'une chaussure comprenant les étapes de positionnement d'une tige de chaussure sur une forme, de fermeture de la cavité d'un moule de formage d'une semelle à mouler par injection en emprisonnant une pellicule d'une composition adhésive thermofusible entre la cavité du moule et les marges de la tige destinées au soudage de la semelle, d'injection d'une composition de moulage constituée d'une matière thermoplastique pour remplir la cavité de moulage et ramollir la pellicule de composition adhésive afin de former une semelle soudée à la tige de la chaussure,
procédé caractérisé en ce que, pour emprisonner la pellicule de composition adhésive thermofusible entre la cavité de moulage de la semelle et les marges de la tige destinées au soudage de la semelle, on amène au moins une partie de la pellicule de composition adhésive formant film soit au-dessus de l'entrée de la cavité de moulage, soit au-dessus des marges de soudage de la tige montée sur forme et en ce qu'on dépose sans intervention humaine en au moins deux temps ladite partie de la pellicule de composition thermofusible de la composition adhésive découpée du reste du film de manière à recouvrir soit la totalité de l'ouverture de la cavité de moulage, soit l'intégralité des marges de soudage de la tige.

2. Procédé de fabrication selon la revendication 1,
caractérisé en ce que, pour la dépose de la pellicule de composition adhésive en au moins deux temps, on découpe dans un premier temps l'extrémité de la pellicule solidaire du reste du film de telle sorte que cette extrémité libre vient se placer, par gravité à l'extérieur et au voisinage, soit d'un bord de l'entrée de la cavité de moulage de la semelle, soit d'un bord de la tige montée sur forme, puis, dans un deuxième temps, on libère de ses moyens d'amenée l'autre extrémité de la découpe de pellicule de composition adhésive retenue soit au-dessus de la cavité de moulage, soit au-dessus de la tige, en particulier des marges de soudage de ladite tige, de telle sorte que cette autre extrémité de la découpe vient soit se placer au voisinage d'un bord opposé de la cavité de moulage, soit d'un bord opposé de la tige de manière à recouvrir la totalité des marges de soudage de ladite tige.

3. Procédé de fabrication selon l'une des revendication 1 et 2,
caractérisé en ce que pour la dépose en au moins deux temps de la pellicule de composition adhésive, on découpe l'extrémité de la pellicule solidaire du reste du film, on amène cette portion de film au-dessus de l'ouverture de la cavité de moulage ou des tiges de moulage de la semelle, en ce qu'on libère dans un premier temps de ses moyens d'amenée une extrémité de la découpe de pellicule de composition adhésive de telle sorte que cette extrémité libre vient se placer, par gravité à l'extérieur et au voisinage, soit d'un bord de l'entrée de la cavité de moulage de la semelle, soit d'un bord de la tige montée sur forme, en ce qu'on libère dans un deuxième temps de ses moyens d'amenée l'autre extrémité de la découpe qui vient soit se placer au voisinage d'un bord opposé de la cavité de moulage recouvrant ainsi la totalité de l'ouverture de la cavité de moulage, soit d'un bord opposé de la tige de manière à recouvrir la totalité des marges de soudage de ladite tige.

4. Procédé de fabrication selon l'une des revendications 1 à 3,
caractérisé en ce que la pellicule de composition adhésive étant disposée au-dessus de l'entrée de la cavité de moulage, on amène la tige montée sur forme et plus particulièrement les marges de soudage de ladite tige en contact de pression avec la face supérieure de ladite pellicule et on injecte de manière quasi-simultanée la composition de moulage de la semelle.

5. Procédé de fabrication selon l'une des revendications 1 à 4,
caractérisé en ce que la pellicule de composition adhésive étant disposée en contact avec les marges de soudage de la tige montée sur forme, on chauffe ladite composition adhésive à une température inférieure à sa température de fusion de manière à permettre la rétraction du film autour de ladite tige, en ce qu'on bascule la forme de manière à amener la tige montée sur forme et plus particulièrement les marges de soudage de la tige à l'entrée de la cavité de moulage de la semelle, en ce qu'on injecte de manière quasi-simultanée la composition de moulage de la semelle.

6. Procédé de fabrication selon l'une des revendication 1 à 5,
caractérisé en ce qu'on stocke la pellicule de composition adhésive formant film sur un support, en ce qu'on dévide une portion de pellicule de composition adhésive, en ce que simultanément ou préalablement au dévidage, on réalise un prédécoupage de la pellicule constituant une amorce de rupture, en ce qu'on amène au-dessus de l'entrée de la cavité de moulage de la semelle ou au-dessus de la surface de la tige en particulier des marges de soudage de la semelle au moins une partie de la pellicule de composition adhésive déstockée et en ce qu'on dépose par recouvrement la pellicule adhésive à l'entrée de la cavité de moulage de la semelle ou sur la surface de la tige.

7. Procédé de fabrication selon l'une des revendication 1 à 6,
caractérisé en ce que la surface de pellicule adhésive pour recouvrir l'ouverture de la cavité de moulage ou la tige de chaussure est supérieure à ladite ouverture ou à la surface de la tige, l'excès de pellicule non utilisé étant éliminé au cours du démoulage de la semelle.

8. Machine de distribution d'une pellicule de composition adhésive pour la mise en oeuvre du procédé conforme à la revendication 1, du type comprenant des moyens de découpe (4) d'une portion de pellicule (14) de composition adhésive,
caractérisée en ce qu'elle comprend en outre des moyens de stockage (9) de la pellicule (14) de composition adhésive, et des moyens d'amenée (11) et de maintien temporaire (3,15,10) d'au moins une portion de pellicule (14) de composition adhésive au-dessus de l'ouverture de la cavité de moulage ou au-dessus des marges de soudage de la tige pour la dépose en au moins deux temps de ladite portion de pellicule de composition adhésive.

9. Machine selon la revendication 8,
caractérisée en ce qu'elle comprend des moyens de prédécoupage du film de manière à faciliter l'ébarbage de la semelle.

10. Machine selon la revendication 9,
caractérisée en ce que les moyens de prédécoupage du film sont constitués d'un organe de découpe (20), du type comportant à sa périphérie des éléments coupants (19), tels que des dents, disposé au-dessus de la pellicule adhésive et des moyens d'amenée intermittente (23) de l'organe de coupe (20) en contact avec le film de manière à constituer une amorce de rupture (18) du film.

11. Machine selon la revendication 10,
caractérisée en ce que l'amorce de rupture se présente sous forme de ligne(s) de pointillé continue(s) ou discontinu(s).

12. Machine selon la revendication 8,
caractérisée en ce qu'elle comprend des moyens de programmation de la cadence de dépose du film.

13. Machine selon l'une des revendication 8 à 12,
caractérisée en ce que les moyens d'amenée et de maintien temporaire de la pellicule de composition adhésive au-dessus de l'ouverture de la cavité de moulage ou au-dessus des marges de soudage de la tige sont constitués par un organe (3) muni de doigts ou de logements creux soumis à une dépression temporaire de manière à former ventouses pour la préhension du film, ledit organe (3) étant animé d'un mouvement de va-et-vient au-dessus de l'ouverture de la cavité de moulage ou au-dessus de la tige montée sur forme grâce à un organe d'actionnement tel qu'un vérin (15).

14. Machine selon l'une des revendication 8 à 13,
caractérisée en ce que les moyens de découpe d'une portion de pellicule adhésive sont constitués par un fil métallique (4) parcouru par un courant électrique.

## Claims

1. Process for the production of an article of footwear or a shoe comprising the steps of positioning an ankle part on a last, closing the cavity of a mould for forming a sole to be injection moulded while trapping a film of a heat-fusible adhesive composition between the cavity of the mould and the edges of the ankle part which are intended for bonding the sole, injecting a moulding composition formed from a thermoplastic material to fill the mould cavity and softening the film of adhesive composition in order to form a sole bonded to the ankle part of the shoe, the process being characterised in that, in order to trap the film of heat-fusible adhesive composition between the mould cavity of the sole and the edges of the ankle part which are intended for bonding the sole, at least a part of the film of film-forming adhesive composition is brought either over the inlet of the mould cavity or over the bonding edges of the ankle part mounted on the last, and in that, without human intervention and in at least two phases, the said part of the film of heat-fusible composition of the adhesive composition cut from the rest of the film is disposed so as to cover either all of the opening of the mould cavity or all of the bonding edges of the ankle part.

2. Production process according to claim 1, characterised in that, in order to place the film of adhesive composition in at least two phases, the end of the film integral with the rest of the film is cut out in a first phase so that this free end comes to be positioned by gravity outside and in the proximity either of an edge of the inlet of the mould cavity of the sole or of an edge of the ankle part mounted on the last, then, in a second phase the other end of the cut-out of film of adhesive composition held either over the mould cavity or over the ankle part, in particular the bonding edges of the said ankle part is released from its conveying means so that this other end of the cut-out comes either to be positioned in the proximity of an opposite edge of the mould cavity or of an opposite edge of the ankle part so as to cover all the bonding edges of the said ankle part.

3. Production process according to one of claims 1 and 2, characterised in that in order to position, in at least two phases, the adhesive composition film, the end of the film integral with the rest of the film is cut out, this portion of film is brought over the opening of the mould cavity or moulding ankle parts of the sole, in that, in a first phase, an end of the cut-out of adhesive composition film is released from its conveying means so that this free end comes to be placed by gravity outside and in the proximity either of an edge of the inlet of the mould cavity of the sole or of an edge of the ankle part mounted on the last, in that, in a second phase, the other end of the cut out is released from its conveying means and comes to be placed in the proximity either of an opposite edge of the mould cavity thus covering the whole of the opening of the mould cavity or of an opposite edge of the ankle part so as to cover all of the bonding edges of the said ankle part.

4. Production process according to one of claims 1 to 3, characterised in that the adhesive composition film being disposed over the inlet of the mould cavity, the ankle part mounted on the last and, more particularly, the bonding edges of the said ankle part are brought into pressurised contact with the upper face of the said film and the sole moulding composition is injected in a quasi-simultaneous manner.

5. Production process according to one of claims 1 to 4, characterised in that the adhesive composition film being disposed in contact with the bonding edges of the ankle part mounted on the last, the said adhesive composition is heated to a temperature lower than its fusion temperature so as to permit retraction of the film about the said ankle part, in that the last is tipped so as to bring the ankle part mounted on the last and, more particularly, the bonding edges of the ankle part to the inlet of the mould cavity of the sole, in that the sole moulding composition is injected in a quasi-simultaneous manner.

6. Production process according to one of claims 1 to 5, characterised in that the film of film-forming adhesive composition is stored on a support, in that a portion of adhesive composition film is removed, in that at the same time as or prior to this removal, a pre-cutting of the film is carried out forming an incipient break, in that at least a part of the adhesive composition film removed from storage is brought over the inlet of the mould cavity of the sole or over the surface of the ankle part in particular the bonding edges of the sole, and in that the adhesive film is disposed in a covering manner at the inlet of the mould cavity of the sole or on the surface of the ankle part.

7. Production process according to one of claims 1 to 6, characterised in that the surface of the adhesive film for covering the opening of the mould cavity or the ankle part of the shoe is greater than the said opening or the surface of the ankle part, the excess of film not used being removed as the sole is removed from the mould.

8. Machine for dispensing a film of adhesive composition for implementing the process in accordance with claim 1 of the type comprising means (4) for cutting out a portion of film (14) of adhesive composition, characterised in that it also comprises means (9) for storing the film (14) of adhesive composition, and means for conveying (11) and temporarily holding (3, 15, 10) at least a portion of the film (14) of adhesive composition over the opening of the mould cavity or over the bonding edges of the ankle part for the positioning, in at least two phases, of the said portion of adhesive composition film.

9. Machine according to claim 8, characterised in that it comprises means for pre-cutting the film so as to facilitate the deburring of the sole.

10. Machine according to claim 9, characterised in that the film pre-cutting means are formed by a cutting member (20) of the type comprising, at its periphery, cutting elements (19) such as teeth, which member is disposed over the adhesive film, and by intermittent conveying means (23) of the cutting member (20) in contact with the film so as to form an incipient break (18) in the film.

11. Machine according to claim 10, characterised in that the incipient break is in the form of a continuous or discontinuous dotted line or lines.

12. Machine according to claim 8, characterised in that it comprises means for programming the rate of placement of the film.

13. Machine according to one of claims 8 to 12, characterised in that the means for conveying and temporarily holding the film of adhesive composition over the opening of the mould cavity or over the bonding edges of the ankle part are formed by a member (3) provided with fingers or hollow recesses subjected to a temporary depression in such a way as to form suction cups to grip the film, the said member (3) being moved in a reciprocating manner over the opening of the mould cavity or over the ankle part mounted on the last by means of an actuating member such as an actuating drive (15).

14. Machine according to one of claims 8 to 13, characterised in that the means for cutting out a portion of adhesive film are formed by a metal wire (4) through which an electric current passes.

## Patentansprüche

1. Verfahren zur Herstellung einer Schuhware oder eines Schuhes, mit den Schritten eines Positionierens eines Oberteiles des Schuhes auf einer Form, eines Schließens des Hohlraumes einer Form zum Bilden einer Sohle, die durch Spritzen zu gießen ist, indem eine Schicht einer adhäsiven, unter Wärmeeinfluß schmelzbaren Zusammensetzung zwischen dem Hohlraum der Form und den Bereichen des Oberteiles, die zum Verschweißen mit der Sohle vorgesehen sind, eingeschlossen wird, eines Einspritzens einer Gießzusammensetzung, die durch ein thermoplastisches Material gebildet ist, zum Füllen des Gießhohlraumes und zum Erweichen der Schicht aus der adhäsiven Zusammensetzung, um eine Sohle zu bilden, die mit dem Oberteil des Schuhes verschweißt ist, dadurch gekennzeichnet, daß zum Einschließen der Schicht der adhäsiven, unter Wärmeeinfluß schmelzbaren Zusammensetzung zwischen dem Hohlraum zum Gießen der Sohle und den Bereichen des Oberteiles, die zum Verschweißen mit der Sohle vorgesehen sind, wenigstens ein Teil der Schicht der adhäsiven Zusammensetzung, die einen Film bildet, entweder oberhalb des Eintrittes des Gießhohlraumes oder oberhalb der Verschweißbereiche des Oberteiles, das auf der Form angeordnet ist, zugeführt wird und daß ohne menschlichen Eingriff zu wenigstens zwei Zeitpunkten der genannte Teil der Schicht der unter Wärmeeinfluß schmelzbaren Zusammensetzung der adhäsiven Zusammensetzung aufgebracht wird, der von dem Rest des Filmes abgeschnitten ist, um entweder die gesamte Öffnung des Gießhohlraumes oder die Gesamtheit der Verschweißbereiche des Oberteiles abzudecken.

2. Herstellungsverfahren nach Anspruch 1, dadurch gekennzeichnet, daß zum Aufbringen der Schicht der adhäsiven Zusammensetzung zu wenigstens zwei Zeitpunkten zu einem ersten Zeitpunkt das Ende der Schicht, das mit dem Rest des Filmes verbunden ist, abgeschnitten wird, so daß sich das freie Ende durch Schwerkraft auf der Außenseite und im Bereich entweder eines Randes des Eintrittes des Hohlraumes zum Gießen der Sohle oder eines Randes des auf der Form angeordneten Oberteiles plaziert und daß dann zu einem zweiten Zeitpunkt das andere Ende des abgeschnittenen Teiles der Schicht der adhäsiven Zusammensetzung von seinen Zuführmitteln befreit wird, wobei die Schicht entweder oberhalb des Gießhohlraumes oder oberhalb des Oberteiles gehalten ist, insbesondere oberhalb der Verschweißbereiche des genannten Oberteiles, so daß dieses andere Ende des abgeschnittenen Teiles sich entweder im Bereich eines gegenüberliegenden Randes des Gießhohlraumes oder eines gegenüberliegenden Randes des Oberteiles plaziert, um die Gesamtheit der Verschweißbereiche des genannten Oberteiles abzudecken.

3. Herstellungsverfahren nach Anspruch 1 oder 2, dadurch gekennzeichnet, daß zum Aufbringen der Schicht der adhäsiven Zusammensetzung zu wenigstens zwei Zeitpunkten das Ende der Schicht, das mit dem Rest des Filmes verbunden ist, abgeschnitten wird, daß dieser Teil des Filmes oben auf die Öffnung des Gießhohlraumes oder der Oberteile zum Gießen der Sohle zugeführt wird, daß zu einem ersten Zeitpunkt ein Ende des abgeschnittenen Teiles der Schicht der adhäsiven Zusammensetzung von seinen Zuführmitteln befreit wird, so daß sich dieses freie Ende durch Schwerkraft auf der Außenseite und im Bereich entweder eines Randes des Eintrittes des Hohlraumes zum Gießen der Sohle oder eines Randes des Oberteiles, das auf der Form angeordnet ist, plaziert, daß zu einem zweiten Zeitpunkt das andere Ende des abgeschnittenen Teiles von seinen Zuführmitteln befreit wird, das sich im Bereich eines gegenüberliegenden Randes des Gießhohlraumes plaziert, indem es so die Gesamtheit der Öffnung des Gießhohlraumes abdeckt, oder auf einem gegenüberliegenden Rand des Oberteiles, um die Gesamtheit der Verschweißbereiche des genannten Oberteiles abzudecken.

4. Herstellungsverfahren nach einem der Ansprüche 1 bis 3, dadurch gekennzeichnet, daß nach dem Aufbringen der Schicht der adhäsiven Zusammensetzung oben auf den Eintritt des Gießhohlraumes das auf der Form angeordnete Oberteil und insbesondere die Verschweißbereiche des genannten Oberteiles in Druckkontakt mit der Oberfläche der genannten Schicht gebracht werden und daß quasisimultan die Zusammensetzung zum Gießen der Sohle eingespritzt wird.

5. Herstellungsverfahren nach einem der Ansprüche 1 bis 4, dadurch gekennzeichnet, daß nach dem Aufbringen der Schicht der adhäsiven Zusammensetzung in Kontakt mit den Verschweißbereichen des auf der Form angeordneten Oberteiles die genannte adhäsive Zusammensetzung auf eine Temperatur erwärmt wird, die unterhalb ihrer Schmelztemperatur liegt, um das Zurückziehen des Filmes um das Oberteil herum zu ermöglichen, daß die Form bewegt wird, um das auf der Form angeordnete Oberteil und insbesondere die Verschweißbereiche des Oberteiles zu dem Eintritt des Hohlraumes zum Gießen der Sohle zuzuführen, und daß quasisimultan die Zusammensetzung zum Gießen der Sohle eingespritzt wird.

6. Herstellungsverfahren nach einem der Ansprüche 1 bis 5, dadurch gekennzeichnet, daß die Schicht der adhäsiven Zusammensetzung, die einen Film bildet, auf einer Halterung gelagert wird, daß ein Teil der Schicht der adhäsiven Zusammensetzung abgewickelt wird, daß gleichzeitig oder vor dem Abwickeln ein Vorschnitt der Schicht gebildet wird, der eine Sollbruchstelle bildet, daß oben auf den Eintritt des Hohlraumes zum Gießen der Sohle oder oben auf die Oberfläche des Oberteiles, insbesondere die Bereiche zum Verschweißen mit der Sohle, wenigstens ein Teil des Filmes aus der abgewickelten adhäsiven Zusammensetzung zugeführt wird und daß durch Abdecken die adhäsive Schicht auf den Eintritt des Hohlraumes zum Gießen der Sohle oder auf die Oberfläche des Oberteiles aufgebracht wird.

7. Herstellungsverfahren nach einem der Ansprüche 1 bis 6, dadurch gekennzeichnet, daß die Oberfläche der adhäsiven Schicht zum Abdecken der Öffnung des Gießhohlraumes oder des Oberteils des Schuhs oberhalb der genannten Öffnung oder der Oberfläche des Oberteiles angeordnet ist und daß ein überschüssiger, nicht verwendeter Teil der Schicht im Verlauf des Ausformens der Sohle entfernt wird.

8. Maschine zum Abgeben einer Schicht aus einer adhäsiven Zusammensetzung zur Durchführung eines Verfahrens nach Anspruch 1, mit Mitteln (4) zum Abschneiden eines Teiles der Schicht (14) der adhäsiven Zusammensetzung, dadurch gekennzeichnet, daß sie ferner Mittel (9) zum Lagern der Schicht (14) der adhäsiven Zusammensetzung und Mittel zum Zuführen (11) und zum zeitweisen Halten (3, 5, 10) wenigstens eines Teiles der Schicht (14) der adhäsiven Zusammensetzung oberhalb der Öffnung des Gießhohlraumes oder oberhalb von Verschweißbereichen des Oberteiles aufweist zum Aufbringen des genannten Teiles der Schicht der adhäsiven Zusammensetzung zu wenigstens zwei Zeitpunkten.

9. Maschine nach Anspruch 8, dadurch gekennzeichnet, daß sie Mittel zum Vorschneiden des Filmes aufweist, um das Entgraten der Sohle zu erleichtern.

10. Maschine nach Anspruch 9, dadurch gekennzeichnet, daß die Mittel zum Vorschneiden des Filmes gebildet sind durch ein Schneidorgan (20), das an seinem Umfang Schneidelemente (19), beispielsweise Zähne, aufweist, das oberhalb der adhäsiven Schicht angeordnet ist, und durch Mittel zum intermittierenden Zuführen (23) des Schneidorganes (20) in Kontakt mit dem Film, um eine Sollbruchstelle (18) an den Film zu bilden.

11. Maschine nach Anspruch 10, dadurch gekennzeichnet, daß die Sollbruchstelle die Form von wenigstens einer unterbrochenen oder ununterbrochenen punktierten Linie aufweist.

12. Maschine nach Anspruch 8, dadurch gekennzeichnet, daß sie Mittel zur Programmierung des Taktes beim Aufbringen des Films aufweist.

13. Maschine nach einem der Ansprüche 8 bis 12, dadurch gekennzeichnet, daß die Mittel zum Zuführen und zum zeitweisen Halten der Schicht der adhäsiven Zusammensetzung oberhalb der Öffnung des Gießhohlraumes oder oberhalb der Verschweißbereiche des Oberteiles durch ein Organ (3) gebildet sind, das mit Zapfen oder vertieften Aufnahmen versehen ist, die einem zeitweisen Unterdruck unterworfen werden, um Saugöffnungen für das Greifen des Filmes zu bilden, wobei das Organ (3) mittels eines Betätigungsorganes, beispielsweise eines Zylinders, in eine Hin- und Herbewegung oberhalb der Öffnung des Gießhohlraumes oder oberhalb des an der Form angeordneten Oberteiles versetzt wird.

14. Maschine nach einem der Ansprüche 8 bis 13, dadurch gekennzeichnet, daß die Mittel zum Abschneiden eines Teiles der adhäsiven Schicht durch einen von einem elektrischen Strom durchflossenen metallischen Draht (4) gebildet sind.
